Europäisches Patentamt

European Patent Office

Office européen des brevets

(11) Veröffentlichungsnummer: **0 328 701**
**A1**

## (12) EUROPÄISCHE PATENTANMELDUNG

(21) Anmeldenummer: 88102263.6

(22) Anmeldetag: 17.02.88

(51) Int. Cl.⁴: **B01D 17/025 , B01D 19/00**

(43) Veröffentlichungstag der Anmeldung:
23.08.89 Patentblatt 89/34

(84) Benannte Vertragsstaaten:
**BE CH FR IT LI LU**

(71) Anmelder: **Meier, Karl**
**Wilhelm-Raabe-Strasse 10**
**D-3450 Holzminden 1(DE)**

(72) Erfinder: **Meier, Karl**
**Wilhelm-Raabe-Strasse 10**
**D-3450 Holzminden 1(DE)**

(74) Vertreter: **Patentanwälte Dipl.-Ing. Rudolf**
**Bibrach Dipl.-Ing. Elmar Rehberg**
**Postfach 1453 Pütterweg 6**
**D-3400 Göttingen(DE)**

(54) Vorrichtung zum kontinuierlichen Trennen von Gemischen aus zwei Flüssigkeiten unterschiedlichen spezifischen Gewichts und einem Gas.

(57) Eine Vorrichtung zum kontinuierlichen Trennen von Gemischen von zwei Flüssigkeiten unterschiedlichen spezifischen Gewichts und einem Gas weist ein Gehäuse (1) auf, an dessen Seitenwandung (3) ein Anschluß (7) für den Eintritt des Gemischs, ein Anschluß (16) für den Austritt der einen Flüssigkeit sowie ein Anschluß (19) für den Austritt der anderen Flüssigkeit vorgesehen sind. Eine spitzdachförmige Trennwand (4) verbindet die Seitenwandung (3) und es ist eine Abscheidekammer (6) für die Trennung der beiden Flüssigkeiten voneinander unterhalb der Trennwand (4) vorgesehen. Die höchste Stelle der Trennwand (4) ist mit dem Anschluß (19) verbunden. Es ist ein in die Abscheidekammer (6) eintauchendes Steigrohr (14) vorgesehen, welches zu dem Anschluß (16) für den Austritt der einen Flüssigkeit führt. Oberhalb der spitzdachförmigen Trennwand (4) ist eine an die Atmosphäre angeschlossene Trennkammer (5) für die Abfuhr des Gases und gasdicht in der Trennwand (4) ein die Trennkammer (5) mit der Abscheidekammer (6) verbindendes Überlaufrohr (9) vorgesehen. In der Abscheidekammer (6) ist eine Überfallwand (12) angeordnet, die unterhalb des Überlaufrohres (9) im Gehäuse (1) eine Umkehrkammer (13) von der Abscheidekammer (6) abteilt. Die unteren Enden (11), (15) des Überlaufrohres (9) und des Steigrohres (14) sind unterhalb der Oberkante der Überfallwand (12) angeordnet.

Fig. 1

## Vorrichtung zum kontinuierlichen Trennen von Gemischen aus zwei Flüssigkeiten unterschiedlichen spezifischen Gewichts und einem Gas

Die Erfindung geht aus von einer Vorrichtung zum kontinuierlichen Trennen von Gemischen aus zwei Flüssigkeiten unterschiedlichen spezifischen Gewichts und einem Gas, mit einem Gehäuse, an dessen Seitenwandung ein Anschluß für den Eintritt des Gemischs, ein Anschluß für den Austritt der einen Flüssigkeit sowie ein Anschluß für den Austritt der anderen Flüssigkeit vorgesehen sind, mit einer die Seitenwand verbindenden spitzdachförmigen Trennwand, unter der eine Abscheidekammer für die Trennung der beiden Flüssigkeiten voneinander vorgesehen ist und deren höchste Stelle mit dem Anschluß für den Austritt der anderen Flüssigkeit verbunden ist, und mit einem in die Abscheidekammer eintauchenden Steigrohr, welches zu dem Anschluß für den Austritt der einen Flüssigkeit führt. Eine solche Vorrichtung wird insbesondere zur Trennung von Öl, Wasser und Luft eingesetzt, beispielsweise bei aufgetrenen Ölunfällen, wenn Öl in die Kanalisation oder in Bäche und Flüsse gelangt.o

Eine Vorrichtung der eingangs beschriebenen Art ist aus der DE-OS 25 36 644 bekannt. Dabei ist innerhalb eines Gehäuses eine spitdachförmige Trennwand angeordnet, deren höchste Stelle mit dem Anschluß für den Austritt des Öls verbunden ist. Ein Anschluß für den Eintritt des Gemischs ist rohrförmig abknickend vorgesehen, welches gasdicht durch die Trennwand hindurchgeführt und im Bereich der Trennwand endend angeordnet ist. Unterhalb der Trennwand ist im Gehäuse eine Abscheidekammer gebildet. Das Gemischt wird an relativ hoher Stelle der Abscheidekammer eingeführt, so daß durch die Strömung die Abscheidewirkung in der Abscheidekammer bereits beeinträchtigt wird. Andererseits ragt ein Steigrohr durch die Trennwand hindurch und bis in die Abscheidekammer ein, welches an seinem unteren Ende offen ausgebildet ist und in dem das Wasser aufsteigt und abfließen soll. Die Höhendifferenz zwischen dem Anschluß für den Eintritt des Gemischs und dem Anschluß für den Austritt des Wassers wirkt sich nur im Zusammenhang mit einem von einer Pumpe, die das Gemisch fördert, einwirkenden Druck aus. Bei dieser bekannten Vorrichtung, die stationär ausgebildet ist, besteht die Gefahr, daß einerseits die Abscheidewirkung in der Abscheidekammer beeinträchtigt wird und andererseits eine kurzschlußartige Durchströmung in der Weise erfolgt, daß das Gemisch der beiden Flüssigkeiten durch das Steigrohr abgezogen wird. Der Raum oberhalb der spitzdachförmigen Trennwand wird für die Anordnung einer Isolierung genutzt, um eine gewisse Frostsicherheit zu erreichen.

Die DE-OS 30 14 204 zeigt ein Verfahren und eine Vorrichtung zum Trennen oder Abziehen eines Gemischs aus Leicht-, Schwerflüssigkeit und ggf. Schlamm. Die dabei eingesetzte Vorrichtung weist eine Reihe von Behältern auf, die mehrstufig hintereinandergeschaltet vorgesehen sind. Es sind mehrere Abscheidestufen gebildet und ansonsten auch ein Schlammfangtank vorgesehen. Auch diese Vorrichtung setzt voraus, daß z. B. ein Öl/Wasser/Luftgemisch aus einem Bach in großen Mengen abgesaugt, vermittels Tankwagen zu einer solchen stationären Vorrichtung gebracht werden muß, wo dann die Aufarbeitung erfolgt.

Der Erfindung liegt die Aufgabe zugrunde, ausgehend von einer Vorrichtung der eingangs beschriebenen Art ein tragbares Gerät zu schaffen, mit dem sich an Ort und Stelle eine Trennung zwischen den beiden Flüssigkeiten und dem Gas durchführen läßt.

Erfindungsgemäß wird dies dadurch erreicht, daß oberhalb der spitzdachförmigen Trennwand eine an die Atmosphäre angeschlossene Trennkammer für die Abfuhr des Gases und und gasdicht in der Trenndicht ein die Trennkammer mit der Abscheidekammer verbindendes Überlaufrohr vorgesehen sind, daß in der Abscheidekammer eine Überfallwand angeordnet ist, die unterhalb des Überlaufrohres im gehäuse eine Umkehrkammer von der Abscheidekammer abteilt, und daß die unteren Enden des Überlaufrohres und die unteren Enden des Steigrohres unterhalb der Oberkante der Überfallwand angeordnet sind. Damit wird zunächst erreicht, daß das von einer Pumpe z. B. aus einem verunreinigten Bach abgesaugte Gemisch drucklos in die Trennkammer eintritt, wobei die Trennung zwischen dem Gas, also der Luft und dem Flüssigkeitsgemisch stattfindet. Zu diesem Zweck ist die Trennkammer an die Atmosphäre angeschlossen. In der Trennkammer steigt nun der Spiegel des Flüssigkeitsgemischs, bis der Einlauf des Überlaufrohres erreicht wird, so daß das Gemisch vermittels des Überlaufrohres durch die Trennwand hindurchgeführt wird und an vergleichsweise tiefer Stelle in die Abscheidekammer eintritt. Ein Teil der Abscheidekammer wird von einer Umkehrkammer gebildet, die unterhalb des freien Endes des Überlaufrohres angeordnet ist und durch eine Überfallwand von der restlichen Abscheidekammer getrennt ist. Auf diese Art und Weise wird dem einströmenden Gemisch eine Richtungsumkehr aufgezwungen, so daß dieses aufwärts strömt, bis die obere Kante der Überfallwand erreicht wird. Von dort tritt das Gemisch in vergleichweise langsamer Strömungsgeschwindigkeit in die eigentliche Abscheidekammer über, in der infolge eines großen Raumangebots die Durchflußgeschwindigkeit nochmals verringert ist, so daß hier eine Trennung der beiden Flüssigkeiten infolge des unterschiedlichen spezifischen Gewichts stattfindet, und zwar sinkt das Wasser ab, während das Öl in der Abscheidekammer aufsteigt. Durch die spitzdachförmige Ausbildung der Trennwand wird das Öl im oberen Bereich gesammelt und zusammengeführt, so daß es über den zugehörigen Anschluß abfließt. Andererseits steigt das Wasser von einer tiefer als die obere Kante der Überfallwand angeordneten Stelle in einem Steigrohr auf und wird an einem entsprechend angeordneten Anschluß abgeführt, beispielsweise in den Bach zurückgeleitet. Es versteht sich, daß die Anschlüsse für den Austritt der beiden Flüssigkeiten und die obere Kante des Überlaufrohres höhenmäßig aufeinander abgestimmt angeordnet sind. Dabei bestimmt die Höhendifferenz zwischen der oberen Kante des Überlaufrohres und dem Anschluß für den Austritt des Wassers im wesentlichen die Durchströmgeschwindigkeit der Vorrichtung. Der Anschluß für den Austritt des Öls ist höher angeordnet als der Anschluß für den Austritt des Wassers. Durch die besonders einfache Konstruktion der Vorrichtung kann diese im wesentlichen als Schweißkonstruktion aus Stahlblech erstellt werden. Sie läßt sich ohne Weiteres handhaben, also transportieren und an Ort und Stelle einsetzen, so daß diese Vorrichtung insbesondere für Feuerwehren nach Ölunfällen Verwendung findet.

Die Umkehrkammer kann einen sich in Fließrichtung erweiternden Querschnitt aufweisen, um auf diese Art und Weise hier bereits die Geschwindigkeit der Durchströmung zu erniedrigen und bereits hier mit der Abscheidewirkung zu beginnen. Durch die aufgezwungene Richtungsumkehr ist eine kurzschlußartige Durchströmung oder Einströmung in das Steigrohr für das Wasser nicht möglich.

Die obere Kante des Überlaufrohres kann höhenverstellbar angeordnet sein. Andererseits ist es auch möglich, das gesamte Überlaufrohr höhenverstellbar anzuordnen. In beiden Fällen muß das Überlaufrohr gasdicht durch die Trennwand hindurchgeführt sein. Mit dieser Höhenverstellbarkeit kann in einfacher Weise eine Anpassung an die zu trennende Gemischmenge, die pro Zeiteinheit von einer Pumpe herangefördert wird, erzielt werden.

Die spitzdachförmige Trennwand kann zugleich den Boden der Trennkammer und die Decke der Abscheidekammer bilden. Diese Doppelfunktion ist insofern vorteilhaft, als damit einmal die Abscheidekammer im oberen Bereich optimal gestaltet wird und andererseits auch die Trennkammer eine gewisse flächenmäßige Ausdehnung erhält, so daß sich in der Trennkammer das von der Pumpe herangeförderte Gemisch beruhigen kann, so daß die Gasabscheidung stattfindet.

Im Gehäuse können zwei gleichhohe Überfallwände angeordnet sein, zwischen denen die Umkehrkammer gebildet ist. Damit ist es in einfacher Weise einerseits möglich, dem Überlaufrohr einen relativ großen Querschnitt der Umkehrkammer zuzuordnen und andererseits die Länge der oberen Kante der Überfallwand zu vergrößern, so daß das Gemisch gleichsam nach zwei Seiten mit weiter verringerter Strömungsgeschwindigkeit in die Abscheidekammer übertreten kann.

Die erfindungsgemäße Vorrichtung wird anhand von zwei Ausführungsbeispielen weiter beschrieben. Es zeigen

Figur 1 einen schematisierten Vertikalschnitt durch die Vorrichtung in einer ersten Ausführungsform,

Figur 2 eine Draufsicht auf die Vorrichtung gemäß Figur 1,

Figur 3 einen schematisierten Vertikalschnitt durch eine zweite Ausführungsform der Vorrichtung und

Figur 4 eine Draufsicht auf die Vorrichtung gemäß Figur 3.

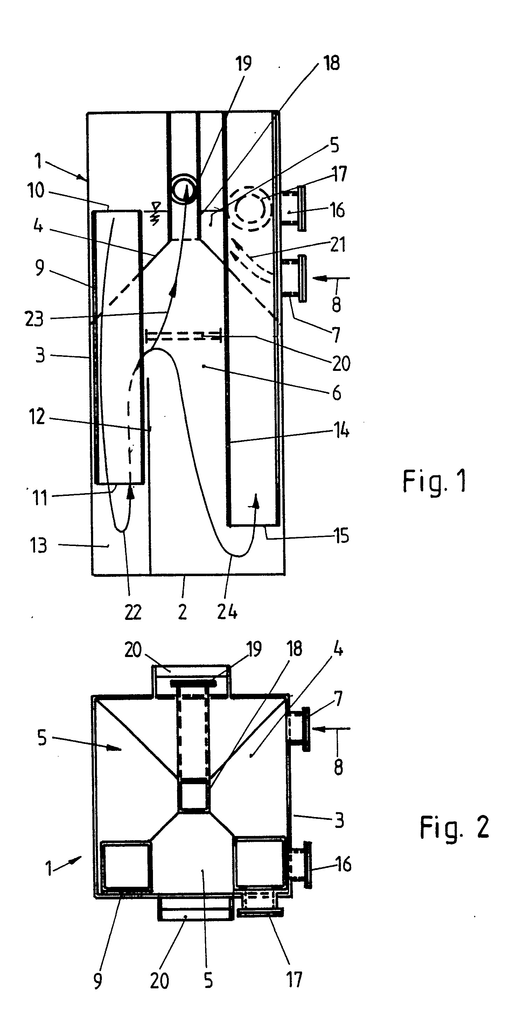

Die in Figur 1 dargestellte Vorrichtung weist ein Gehäuse 1 auf, welches einen Boden 2 und eine Seitenwandung 3 besitzt. Oben ist das Gehäuse 1 offen. Das Gehäuse 1 mit seinen Teilen kann als Schweißkonstruktion aus Blech erstellt sein. Eine spitzdachförmige Trennwand 4 etwa auf 2/3 der Höhe der Seitenwandung 3 teilt oberhalb der Trennwand 4 im Gehäuse 1 eine Trennkammer 5 und unterhalb der Trennwand 4 eine Abscheidekammer 6 ab.

Ein Anschluß 7, der als Stutzen ausgebildet ist, durchsetzt die Seitenwandung 3 und mündet in die Trennkammer 5. Er dient dazu, das von einer Pumpe herangeförderte Luft/Öl/Wassergemisch gemäß Pfeil 8 in die Trennkammer 5 drucklos zu überführen.

In der Trennwand 4 ist vertikal ausgerichtet ein Überlaufrohr 9 gasdicht verankert, welches an seinem oberen Ende 10 und an seinem unteren Ende 11 offen gestaltet ist. Das untere Ende 11 reicht weit durch die Trennwand 4 hindurch nach unten in die Abscheidekammer 6 ein. Von der Abscheidekammer 6 ist durch eine Überfallwand 12 eine Umkehrkammer 13 abgeteilt. Dabei erstreckt sich die Überfallwand 12 bis an die beiden parallelen Seitenwandungen 3 des Gehäuses 1, so daß die Umkehrkammer 13, wie insbesondere aus Figur 2 ersichtlich ist, einen erheblich größeren Durchtrittsquerschnitt aufweist als das Überlaufrohr 9. Die Umkehrkammer 13 ist nach oben hin offen und geht somit in die Abscheidekammer 6 über.

Ähnlich wie das Überlaufrohr 9 ist in der Trenn-

wând 4 ein Steigrohr 14 gasdicht gelagert, welches nach unten mit seinem offenen Ende 15 bis tief in die Abscheidekammer 2 hineinragt, jedenfalls er-. heblich tiefer als die obere Kante der Überfallwand 12. Andererseits durchsetzt das Steigrohr 14 nach oben hin auch die Trennkammer 5. Das Steigrohr kann auch an seinem oberen Ende offen ausgebildet sein, um hier Anschluß an die Atmosphäre zu haben. Es steht aber mit einem oder mehreren Anschlüssen 16, 17 in verbindung, deren Anordnung der Höhe nach auf das obere Ende 10 des Überlaufrohres 9 abgestimmt ist. Dieses obere Ende liegt ca. 4 cm oberhalb der Unterkante der Anschlüsse 16 and 17. Von der höchsten Stelle der spitzdachförmigen Trennwand 4 führt ein Leitungsstück 18 zu einem Anschluß 19, durch den das Öl abfließt. Die untere Kante des Anschlusses 19 ist ca. 2 cm oberhalb der Oberkante des Anschlusses 16 bzw. 17 angeordnet. Handgriffe 20 erleichtern das Eingreifen des Gehäuses 1 bzw. der Vorrichtung, so daß diese über kurze Strecken durchaus getragen werden kann.

Das durch den Anschluß 7 gemäß Pfeil 8 einströmende Luft/Öl/Wassergemisch verteilt sich zunächst gemäß den Pfeilen 21 in der Trennkammer 5, wobei eine Beruhigung stattfindet und das enthaltene Gas (Luft) nach oben in die Atmosphäre austritt. Das obere Ende 10 des Überlaufrohres 9 legt die Füllung bzw. das Niveau der Trennkammer 5 fest, so daß das Gemisch aus wasser und Öl durch das Überlaufrohr 9 nach unten gelangt und in die Umkehrkammer 13 eintritt, wo eine Richtungsumkehr gemäß Pfeil 22 stattfindet. Da die Umkehrkammer 13 sich in STrömungsrichtung erweiternden Querschnitt aufweist, also jedenfalls einen größeren Durchtrittsquerschnitt als das Überlaufrohr 9, verlangsamt sich die Geschwindigkeit des Gemischs und es beginnt bereits eine gewisse Abscheidewirkung. In diesem Sinne kann die Umkehrkammer 13 durchaus die Funktion eines Vorabscheiders haben. Letztlich tritt aber doch das Gemisch über die Überfallwand 12 in die Abscheidekammer 6 über, wo sich der Durchflußquerschnitt nochmals sprunghaft erhöht, so daß die Geschwindigkeit nochmals herabgesetzt wird. Es setzt hier die Abscheidewirkung ein, indem das Öl gemäß Pfeil 23 nach oben aufsteigt und das Wasser gemäß Pfeil 24 nach unten absinkt. Das Öl gelangt schließlich über den Anschluß 19 in einen entsprechenden Auffangbehälter, während das Wasser am unteren Ende 15 in das Steigrohr 14 eintritt und durch die Anschlüsse 16 und 17 drucklos abfließen kann.

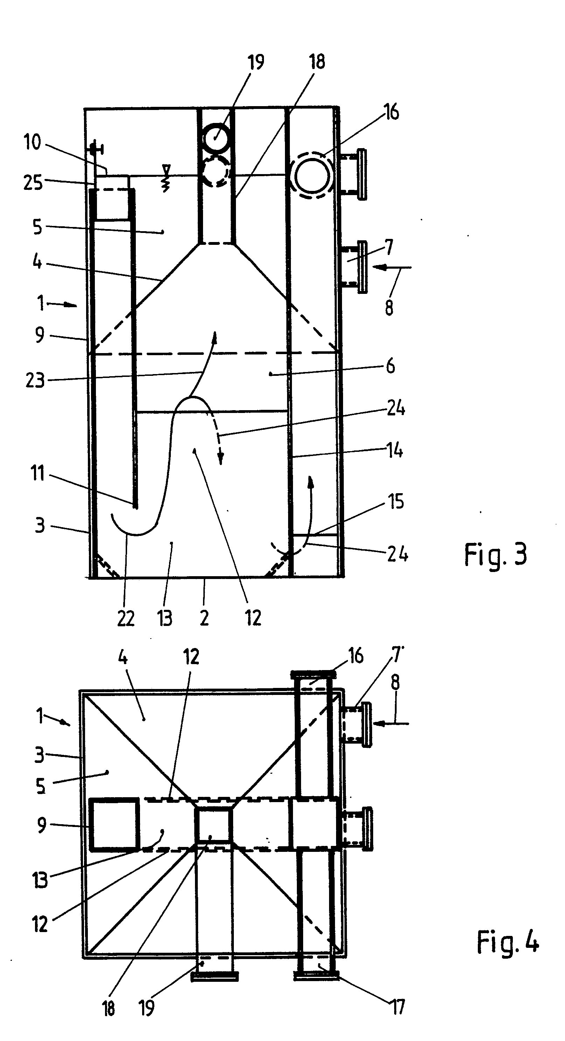

Die Ausführungsform der Vorrichtung gemäß den Figuren 3 und 4 ist an sich ähnlich aufgebaut wie die Vorrichtung nach den Figuren 1 und 2. In dem Überlaufrohr 9 ist im oberen Endbereich ein Rohrstück 25 höhenverschieblich und feststellbar geführt, um auf diese Art und Weise das Einströmniveaus aus der Trennkammer 5 in das Überfallrohr 9 zu verändern. Damit kann eine Anpassung an die Durchströmungsgeschwindigkeit der Vorrichtung und somit eine Anpassung an den Mengenstrom des zu behandelnden Gemischs erzielt werden. Das Überlaufrohr 9 ist hier in der Mitte einer Seitenwand 3 angeordnet, so daß zwei Überfallwände 12 vorgesehen sind, zwischen denen die Umkehrkammer 13 gebildet ist. Die beiden Überfallwände 12 sind gleich hoch ausgebildet, so daß hier das Gemisch nach beiden Seiten (Figur 4) überströmen und sich in der Abscheidekammer 6 verteilen kann. Umgekehrt sind die Überfallwände 12 im Bereich des unteren Endes 15 des Steigrohres 14 durchbrochen, so daß Wasser von beiden Seiten in das Steigrohr 14 eintreten kann. Die Funktion bzw. Wirkungsweise der Vorrichtung gemäß Figure 3 und 4 ist entsprechend derjenigen nach Figur 1 und 2.

**Bezugszeichenliste:**

  1 = Gehäuse
  2 = Boden
  3 = Seitenwandung
  4 = Trennwand
  5 = Trennkammer
  6 = Abscheidekammer
  7 = Anschluß
  8 = Pfeil
  9 = Überlaufrohr
 10 = oberes Ende
 11 = unteres Ende
 12 = Überfallwand
 13 = Umkehrkammer
 14 = Steigrohr
 15 = Ende
 16 = Anschluß
 17 = Anschluß
 18 = Leitungsstück
 19 = Anschluß
 20 = Handgriff
 21 = Pfeil
 22 = Pfeil
 23 = Pfeil
 24 = Pfeil
 25 = Rohrstück

**Ansprüche**

1. Vorrichtung zum kontinuierlichen Trennen von Gemischen aus zwei Flüssigkeiten unterschiedlichen spezifischen Gewichts und einem Gas, mit einem Gehäuse, an dessen Seitenwandung ein Anschluß für den Eintritt des Gemischs, ein Anschluß für den Austritt der einen Flüssigkeit sowie ein Anschluß für den Austritt der anderen Flüssigkeit vorgesehen sind, mit einer die Seitenwand verbindenden spitzdachförmigen Trennwand, unter der eine Abscheidekammer für die Trennung der beiden Flüssigkeiten voneinander vorgesehen ist und deren höchste Stelle mit dem Anschluß für den Austritt der anderen Flüssigkeit verbunden ist, und mit einem in die Abscheidekammer eintauchenden Steigrohr, welches zu dem Anschluß für den Austritt der einen Flüssigkeit führt, dadurch gekennzeichnet, daß oberhalb der spitzdachförmigen Trennwand (4) eine an die Atmosphäre angeschlossene Trennkammer 5 für die Abfuhr des Gases und gasdicht in der Trennwand (4) ein die Trennkammer (5) mit der Abscheidekammer (6) verbindendes Überlaufrohr (9) vorgesehen sind, daß in der Abscheidekammer (6) eine Überfallwand (12) angeordnet ist, die unterhalb des Überlaufrohres (8) im Gehäuse (1) eine Umkehrkammer (13) von der Abscheidekammer (6) abteilt, und daß die unteren Enden (11, 15) des Überlaufrohres (9) und des Steigrohres (14) unterhalb der Oberkante der Überfallwand (12) angeordnet sind.

2. Vorrichtung nach Anspruch 1, dadurch gekennzeichnet, daß die Umkehrkammer (13) einen sich in Fließrichtung erweiternden Querschnitt aufweist.

3. Vorrichtung nach Anspruch 1, dadurch gekennzeichnet, daß die obere Kante (10) des Überlaufrohres (9) höhenverstellbar angeordnet ist.

4. Vorrichtung nach Anspruch 1, dadurch gekennzeichnet, daß das Überlaufrohr (9) insgesamt höhenverstellbar angeordnet ist.

5. Vorrichtung nach Anspruch 1, dadurch gekennzeichnet, daß die spitzdachförmige Trennwand (4) zugleich den Boden der Trennkammer (5) und die Decke der Abscheidekammer (6) bildet.

6. Vorrichtung nach Anspruch 1, dadurch gekennzeichnet, daß im Gehäuse (1) zwei gleich hohe Überfallwände (12) angeordnet sind, zwischen denen die Umkehrkammer (13) gebildet ist.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-2 536 644 (MEIER)<br>* Figur 1 *<br>--- | 1 | B 01 D 17/025<br>B 01 D 19/00 |
| D,A | DE-A-3 014 204 (HAMMERSCHMITT)<br>* Anspruch 4; Figuren 1-5 *<br>--- | 1 | |
| A | EP-A-0 054 793 (ALLIED CORP.)<br>* Anspruch 1; Figuren 1-4, 7 *<br>--- | 1 | |
| A | GB-A- 553 379 (UNTHANK et al.)<br>* Figur 1 *<br>--- | 1 | |
| A | FR-A-2 343 801 (KABEL)<br>* Anspruch 1; Figuren 1, 2 *<br>--- | 1 | |
| A | US-A-3 528 222 (WATERMAN)<br>* Anspruch 1; Figuren 1, 3 *<br>--- | 1 | |
| A | US-A-2 016 642 (LINCOLN)<br>* Anspruch 1; Figuren 1, 2 *<br>--- | 1 | RECHERCHIERTE SACHGEBIETE (Int. Cl.4) |
| A | US-A-4 518 403 (HERTZ)<br>* Anspruch 1; Figuren 1, 2, 5 *<br>--- | 1 | B 01 D 17/00<br>B 01 D 19/00<br>A 23 L 2/32<br>C 02 F 1/40<br>D 01 D 1/10 |
| A | EP-A-0 016 517 (ESI INTERNATIONAL)<br>* Figuren 1, 2 *<br>----- | 1 | |

Der vorliegende Recherchenbericht wurde für alle Patentansprüche erstellt

| Recherchenort | Abschlußdatum der Recherche | Prüfer |
|---|---|---|
| BERLIN | 30-08-1988 | KUEHN P |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)